# FASCICULE DE BREVET EUROPEEN

(11) **EP 2 803 571 B1**
(45) Date de publication et mention de la délivrance du brevet: **29.03.2017**
(21) Numéro de dépôt: 14001206.3
(22) Date de dépôt: 01.04.2014
(51) Int. Cl.: B64C 27/35, B64C 27/51

(54) **Liaison articulée élastique entre un amortisseur de traînée et une pale d'un rotor**
Elastische Gelenkverbindung zwischen einer Zugdämpfungsvorrichtung und einem Blatt eines Rotors
Resilient hinged connection between a lag-lead damper and a rotor blade

(30) Priorité: 16.05.2013 FR 1301126
(43) Date de publication de la demande: 19.11.2014
(73) Titulaire: Airbus Helicopters, 13725 Marignane Cedex (FR)
(72) Inventeur: Varin D'Ainvelle, Arnaud, F-13290 LES Milles (FR)
(74) Mandataire: GPI & Associés

(56) Documents cités:
- EP-A1- 0 080 920
- EP-A1- 1 939 087
- DE-A1- 3 936 775
- FR-A2- 2 456 034

## Description

La présente invention se trouve dans le domaine technique des rotors d'aéronefs à voilures tournantes et plus particulièrement des moyens d'amortissement des mouvements en traînée des pales de ces rotors. L'invention concerne l'implantation de tels moyens d'amortissement sur le rotor d'un aéronef à voilure tournante et plus particulièrement la liaison articulée élastique entre ce moyen d'amortissement et une pale de ce rotor.

De façon générale, un rotor principal d'un aéronef à voilure tournante comporte un moyeu entraîné en rotation selon un axe de rotation sensiblement vertical par un arbre de sortie d'une boite de transmission principale de puissance ainsi qu'au moins deux pales fixées au moyeu par l'intermédiaire d'un ou plusieurs moyen(s) d'articulation approprié(s), par exemple, par l'intermédiaire d'une butée sphérique lamifiée dédiée à chaque pale.

Cette butée sphérique lamifiée permet alors à la pale de pouvoir débattre selon les trois rotations suivantes :
- une rotation autour d'un axe de battement sensiblement horizontal,
- une rotation autour d'un axe de traînée sensiblement vertical, et
- une rotation autour d'un axe de pas de la pale, cet axe de pas étant situé sensiblement longitudinalement selon l'envergure de la pale.

Toutefois, les oscillations de chaque pale, notamment autour de son axe de traînée, peuvent se coupler de façon instable avec les mouvements ou les modes de déformations élastiques de la cellule de l'aéronef en vol, et en particulier ceux de la cellule et de son train d'atterrissage lorsque cet aéronef est posé au sol. De tels phénomènes, connus sous le nom de « résonance sol » et « résonance air », peuvent être dangereux pour l'aéronef lorsque la fréquence propre des oscillations des pales est voisine de l'une des fréquences propres des oscillations de l'aéronef.

Afin d'éviter des couplages catastrophiques entre les mouvements en traînée des pales et ceux la cellule de l'aéronef ou bien ceux de la cellule et de son train d'atterrissage, un moyen d'amortissement est introduit selon l'axe de traînée de chaque pale.

Un tel moyen d'amortissement, dénommé « amortisseur de traînée », subit des mouvements forcés à la fréquence de rotation du rotor, dus aux mouvements par rapport aux axes de pas et de battement de la pale mais aussi aux mouvements de traînée de la pale. L'amortisseur de traînée n'influe cependant que faiblement sur ces mouvements.

L'amortisseur de traînée subit également des mouvements à la fréquence propre de traînée de la pale.

Ces mouvements ne sont pas amortis naturellement, par exemple par les efforts aérodynamiques.

Cet amortisseur de traînée intervient par conséquent pour s'opposer à tout phénomène vibratoire.

L'amortissement du débattement des pales en traînée, en vue d'assurer la stabilité de l'aéronef, permet ainsi de prévenir les phénomènes de résonance sol et de résonance air.

Cet amortissement peut notamment être obtenu par l'utilisation d'amortisseurs reliant chaque pale au moyeu du rotor. Cet amortissement peut également être réalisé par l'implantation d'un amortisseur entre deux pales adjacentes, on parle alors d'« amortisseurs de traînée interpales ».

Quelque soit leur implantation, ces amortisseurs de traînée comportent des moyens de rappel élastique à raideur et amortissement déterminés, de type visqueux ou sec, pour combattre les phénomènes de résonance.

Les documents FR 2427251 et US 2011/0243734 décrivent un rotor entraînant plusieurs pales en rotation, un amortisseur de traînée étant fixé entre chaque pale et le moyeu du rotor. Chaque amortisseur de traînée est fixé à une pale par l'intermédiaire d'une tige sensiblement parallèle à l'axe de rotation du rotor, une liaison de type rotule reliant l'amortisseur à cette tige. Chaque amortisseur de traînée est également fixé par une liaison à rotule au moyeu du rotor.

De même, les documents FR2456034 et EP0080920 décrivent un rotor entraînant plusieurs pales en rotation et comportant un amortisseur de traînée fixé entre chaque pale et le moyeu du rotor.

Selon le document FR2456034, chaque amortisseur de traînée est fixé à une pale et au moyeu respectivement par l'intermédiaire d'une tige sensiblement perpendiculaire à l'axe de rotation du rotor, une liaison de type rotule reliant l'amortisseur à chaque tige.

Selon le document EP0080920, chaque amortisseur de traînée est fixé à une pale par l'intermédiaire d'une tige sensiblement perpendiculaire à l'axe de rotation du rotor et au moyeu par l'intermédiaire d'une tige qui peut être sensiblement perpendiculaire ou bien parallèle à cet axe de rotation du rotor. Une liaison de type rotule relie l'amortisseur à chaque tige.

On connaît également les documents FR 2630703 et EP1939087 qui décrivent un rotor dont chaque pale est fixée au moyeu de ce rotor par un manchon, un amortisseur de traînée interpale étant lié à deux pales adjacentes. Les deux extrémités de chaque amortisseur de traînée sont fixées respectivement à une tige par une liaison à rotule, chaque tige étant fixée à une pale selon une direction sensiblement parallèle à l'axe de rotation du rotor.

En outre, le document US 4491436 décrit un assemblage à rotule entre un bras et une chape munie de deux branches. Un axe est constitué par deux parties s'emboitant l'une dans l'autre, une vis assurant la fixation entre ces deux parties. Chaque partie comporte une première portée conique venant en appui respectivement sur une seconde portée conique de chaque branche de la chape. Un premier élément annulaire est positionné sur une zone centrale cylindrique de l'axe et forme une liaison à rotule avec un second élément complémentaire solidaire du bras. Une rondelle élastique est positionnée sur l'axe afin d'assurer un arrêt axial et un rattrapage du jeu axial.

Enfin, on connaît le document EP 0901580 qui décrit une liaison à rotule comportant un orifice cylindrique pour le montage sur une tige ou un axe. Cette liaison à rotule contient au moins un insert métallique et un organe en élastomère. Cet organe en élastomère permet notamment de réduire la transmission de vibrations entre les deux éléments reliés par cette liaison à rotule.

On constate aujourd'hui que pour un rotor, quelque soit le type de montage utilisé, c'est-à-dire que l'amortisseur de traînée soit positionné entre une pale et le moyeu du rotor ou bien entre deux pales adjacentes, cet amortisseur de traînée est lié généralement à une pale par l'intermédiaire d'une rotule élastique et d'une tige traversant cette rotule élastique selon une direction sensiblement parallèle à l'axe de rotation du moyeu du rotor. Une chape est généralement utilisée pour relier l'amortisseur de traînée à la pale et/ou au moyeu.

Cette rotule élastique, par exemple conforme au document EP 0901580, permet un débattement en rotation de quelques degrés à quelques dizaines de degrés de l'amortisseur de traînée par rapport à la pale à laquelle il est relié. De plus, ces rotations ne sont pas libres, mais soumises à la raideur de cette rotule élastique. Par contre, le comportement d'une rotule élastique n'est pas rigoureusement le même dans toutes les directions.

En effet, une rotule élastique possède une direction privilégiée qui est la direction de l'axe ou de la tige qui la traverse. Une telle rotule élastique permet ainsi un débattement en rotation autour de cette direction privilégiée généralement plus important que les débattements en rotation autour des directions perpendiculaires à cette direction privilégiée.

Par exemple, le débattement en rotation autour de cette direction privilégiée peut aller jusqu'à environ 30° alors que les débattements angulaire autour des directions perpendiculaires à cette direction privilégiée sont limités à environ 10° maximum.

Le fonctionnement d'une rotule élastique est ainsi plus fiable sous des sollicitations autour de cette direction privilégiée que suivant une direction perpendiculaire à cette direction privilégiée. Par suite, une rotule élastique subissant des débattements nombreux et/ou sous des efforts importants autour des directions perpendiculaires à sa direction privilégiée a une durée de vie réduite. A contrario, une rotule élastique subissant principalement des débattements, y compris sous des efforts importants, autour de sa direction privilégiée a une durée de vie importante.

Par ailleurs, une telle rotule élastique relie traditionnellement un amortisseur de traînée à une pale par l'intermédiaire d'une tige qui est sensiblement parallèle à l'axe de rotation du moyeu du rotor et d'une chape. L'orientation de cette tige est favorable à la réduction des efforts de torsion subis par cette tige. En effet, l'axe de rotation du moyeu étant généralement sensiblement vertical, chaque pale subit des débattements en rotation autour d'un axe de traînée sensiblement vertical, autour d'un axe de battement sensiblement horizontal et autour d'un axe de pas de cette pale, cet axe de pas étant situé sensiblement longitudinalement selon l'envergure de la pale.

Ces battements en rotation autour de l'axe de traînée ne sollicitent que très faiblement la tige ou bien la rotule élastique. Ils sollicitent dans ce cas principalement et directement l'amortisseur de traînée. Par contre, les battements en rotation autour de l'axe de battement et autour de l'axe de pas de la pale transmettent un couple important à l'amortisseur de traînée qui est repris essentiellement par la rotule élastique. De plus, ce couple, autour d'un axe sensiblement perpendiculaire à l'axe de rotation du moyeu, génère des sollicitations importantes sur la rotule élastique qui sont orientées principalement autour des directions perpendiculaires à la direction privilégiée de la rotule élastique. De fait, ces battements de la pale ne sollicitent que très faiblement la tige qui est parallèle à l'axe de moyeu, mais de façon importante la rotule élastique. Par suite, l'utilisation de cette rotule élastique qui débat essentiellement perpendiculairement à sa direction privilégiée n'est pas optimisée, de même que sa fiabilité.

La présente invention a alors pour objet de proposer une liaison articulée élastique permettant de s'affranchir des limitations mentionnées ci-dessus, notamment pour augmenter la fiabilité des rotules élastiques utilisées entre les amortisseurs de traînée et les pales du rotor d'un aéronef à voilure tournante.

Le rotor selon l'invention est revendiqué dans la revendication 1.

Selon l'invention, une liaison articulée élastique destinée à relier un amortisseur de traînée et une pale d'un rotor d'un aéronef à voilure tournante comporte :
- une rotule élastique destinée à être liée à l'amortisseur de traînée et comportant une direction privilégiée de rotation,
- une chape destinée à être solidaire de la pale,
- une tige comportant un axe de révolution, cette tige étant assemblée dans la chape et la rotule élastique, l'axe de révolution de la tige étant selon la direction privilégiée de la rotule élastique.

Le rotor comporte au moins deux pales et est entraîné en rotation par un moyeu autour d'un axe de rotation, généralement sensiblement vertical. Le rotor entraine ainsi en rotation les pales et équipe généralement un aéronef à voilure tournante.

Chaque amortisseur de traînée peut être positionné entre une pale et le moyeu du rotor. De préférence, chaque amortisseur de traînée est positionné entre deux pales adjacentes. Les amortisseurs de traînée contribuent ainsi à assurer la stabilité de l'aéronef et à prévenir les phénomènes de résonance sol et de résonance air.

Ce dispositif est remarquable en ce que l'axe de révolution de la tige est destiné à être positionné dans un plan perpendiculaire à l'axe de rotation du moyeu, c'est-à-dire sensiblement horizontal lorsque l'axe de rotation du moyeu est sensiblement vertical. Cette position de l'axe de révolution de la tige dans un plan perpendiculaire à l'axe de rotation du moyeu s'entend lorsque les pales ne subissent aucun battement en rotation. De plus, les axes de révolution des tiges reliant les amortisseurs de traînée à chaque pale du rotor sont alors coplanaires.

Par contre, lorsque le rotor est en fonctionnement, chaque pale du rotor peut débattre en rotation autour des axes de traînée, de battement et/ou de pas. De plus, ces débattements angulaires peuvent être différents pour chaque pale en fonction de sa position en azimut. Par suite, les axes de révolution des tiges ne sont plus, lors de ce fonctionnement du rotor, coplanaires, ni dans un plan perpendiculaire à l'axe de rotation du moyeu.

Comme évoqué précédemment, les battements en rotation des pales transmettent un couple important à l'amortisseur de traînée. Ce couple a essentiellement pour origine les battements de chaque pale autour de son axe de battement et de son axe de pas. Comme précédemment, les battements de chaque pale autour de son axe de traînée sollicitent dans ce cas principalement et directement l'amortisseur de traînée.

Avantageusement, selon l'invention, ce couple s'exerce par rapport à la direction privilégiée de la rotule élastique, c'est-à-dire sensiblement perpendiculairement à l'axe de rotation du moyeu. De fait, la rotule élastique est sollicitée essentiellement autour de sa direction privilégiée. La rotule élastique est donc peu sollicitée autour des directions perpendiculaires à sa direction privilégiée. Par suite, la fiabilité de cette rotule élastique est notablement améliorée par rapport aux rotules élastiques utilisées traditionnellement.

De plus, l'axe de révolution de la tige positionnée entre la chape de chaque pale et la rotule élastique liée à l'amortisseur de traînée est sensiblement perpendiculaire à l'axe de rotation du moyeu et reprend donc une part essentielle de ce couple. Les liaisons entre cette tige et d'une part la chape, d'autre part la rotule élastique sont donc très sollicitées en torsion autour de l'axe de révolution de la tige, qui est aussi l'axe privilégié de la rotule élastique.

Afin de résister à ce couple et aux sollicitations en torsion générées par le battement des pales, la tige est liée par une première liaison par encastrement à la chape de la pale et par une seconde liaison par encastrement à la rotule élastique.

Selon un mode de réalisation de l'invention, la chape, solidaire de la pale, est munie de deux branches, chaque branche comportant un premier orifice. La rotule élastique comporte en son centre un second orifice dont l'axe est selon la direction privilégiée. Ce second orifice est également coaxial aux premiers orifices de la chape.

La tige est composée de deux demi-axes, chaque demi-axe étant assemblé dans un des premiers orifices de la chape et dans le second orifice de la rotule élastique. Deux entretoises métalliques sont positionnées de part et d'autre de la rotule élastique sur chaque demi-axe et entre les deux branches de la chape.

La première liaison par encastrement de la liaison articulée élastique selon l'invention est par exemple obtenue par frottement entre deux portées tronconiques. Chaque demi-axe comporte une forme tronconique à une première extrémité. De même, le premier orifice de chaque branche de la chape comporte une surface tronconique. Par suite, chaque forme tronconique d'un demi-axe coopère avec cette surface tronconique d'un premier orifice d'une branche de la chape, chaque forme tronconique d'un demi-axe ayant une conicité sensiblement identique à la surface tronconique du premier orifice avec laquelle elle coopère. On entend par conicité l'angle entre une génératrice de cette forme tronconique et son axe de révolution.

Afin d'obtenir une première liaison par encastrement capable de résister à de fortes sollicitations en torsion, un effort axial doit être appliqué entre chaque demi-axe et chaque branche de la chape. Cet effort axial plaque ainsi la forme tronconique de chaque demi-axe contre la surface tronconique d'un premier orifice.

Les paramètres particulièrement influant sur l'efficacité de cette première liaison par encastrement obtenue par frottement entre deux portées tronconiques sont, outre cet effort axial, le coefficient de frottement entre ces deux portées coniques et la conicité de ces portées coniques.

Les matières de chaque demi-axe et de la chape ont notamment un effet direct sur ce coefficient de frottement entre la forme tronconique et la surface tronconique et doivent être choisies afin que ce coefficient de frottement soit élevé. Par exemple, la chape est en acier et chaque demi-axe peut être en acier.

Cet effort axial est exercé par l'intermédiaire d'une vis et d'un écrou positionnés de part et d'autre des demi-axes, la vis traversant un troisième orifice présent dans chaque demi-axe. Afin de prévenir tout risque de perte de cet effort axial, cet écrou peut être un écrou freiné. De plus, la tenue de cette liaison vis/écrou peut être sécurisée à l'aide d'une goupille traversant par exemple l'écrou et la vis.

En outre, l'utilisation d'une première liaison par encastrement obtenue par frottement entre deux portées tronconiques permet que la tige constituée par les deux demi-axes ne soit pas indexée angulairement par rapport à la chape, ces deux portées étant lisses. De fait, le montage de chaque demi-axe dans un premier orifice de la chape est facilité.

De plus, cet effort axial permet d'avoir une liaison articulée élastique sans jeu axial. En effet, un jeu axial est nécessaire afin de garantir l'assemblage de cette liaison articulée élastique, notamment pour assembler les deux entretoises et la rotule élastique entre les deux branches de la chape. Ainsi, lors de l'application de cet effort axial, les formes tronconiques des deux demi-axes sont en appui sur les surfaces tronconiques des premiers orifices de chaque branche et, par suite, les deux branches de la chape peuvent alors se déformer dans le domaine élastique jusqu'à ce que l'empilement constitué par ces deux branches de la chape, les deux entretoises et la rotule élastique ne présente pas de jeu axial. La déformation de chaque branche de la chape est de l'ordre de quelques dixièmes de millimètre. Par exemple, cette déformation est de 0.2mm maximum (0.2 millimètre). Le fonctionnement de la rotule élastique est alors optimisé, aucun jeu axial ne venant perturber ce fonctionnement.

Avantageusement, l'utilisation d'une vis et d'un écrou permet que les demi-axes soient identiques et assemblés de façon symétrique dans la liaison articulée élastique selon l'invention.

Selon une première variante de l'invention, la forme tronconique de chaque demi-axe est munie d'au moins une fente. Ainsi lors de l'application de l'effort axial, chaque forme tronconique peut se déformer afin de s'adapter à la surface tronconique du premier orifice de chaque branche de la chape. Chaque fente permet ainsi d'absorber les différentes tolérances de fabrication des formes tronconiques de chaque demi-axe et des surfaces tronconiques du premier orifice de chaque branche de la chape. La première liaison par encastrement obtenue par frottement de deux portées tronconiques est alors plus efficace, chaque forme tronconique pouvant s'adapter géométriquement à la surface tronconique avec laquelle elle coopère.

Selon une seconde variante de l'invention, l'écrou peut être intégré dans un des demi-axes. Les demi-axes ne sont alors plus identiques, mais la liaison articulée élastique peut éventuellement être plus compacte. De plus, cette liaison articulée élastique comporte moins de composants.

La seconde liaison par encastrement de la liaison articulée élastique selon l'invention est par exemple obtenue par des cannelures et une butée axiale. Chaque demi-axe comporte une seconde extrémité munie de premières cannelures sur sa surface extérieure. De même, le second orifice de la rotule élastique comporte des secondes cannelures coopérant avec les premières cannelures de chaque demi-axe. Ainsi, un couple peut être transmis entre la rotule élastique et la tige constituée des deux demi-axes.

De plus, la seconde liaison par encastrement est obtenue par l'intermédiaire de l'effort axial exercé par la vis et l'écrou qui bloque la translation axiale possible entre la tige et la rotule élastique au niveau de ces cannelures. En effet, cet effort axial, plaquant axialement l'ensemble des composants constituant cette liaison articulée élastique, interdit tout déplacement relatif entre la tige et la rotule élastique.

Les première et seconde liaisons par encastrement de la liaison articulée élastique selon l'invention peuvent également être inversées, c'est-à-dire que la première liaison par encastrement peut être obtenue par des cannelures et une butée axiale entre les branches de la chape et les demi-axes alors que la seconde liaison par encastrement peut être obtenue par frottement entre deux portées tronconiques entre la rotule élastique et les demi-axes.

De plus, selon une troisième variante de l'invention, les première et seconde liaisons par encastrement de la liaison articulée élastique sont obtenues par frottement entre deux portées tronconiques. D'une part, chaque demi-axe comporte, à une première extrémité, une première forme tronconique coopérant respectivement avec une première surface tronconique d'un premier orifice d'une branche de la chape. D'autre part, chaque demi-axe comporte, à une seconde extrémité, une seconde forme tronconique coopérant avec une seconde surface tronconique présente à chaque extrémité de la rotule élastique.

Ensuite, l'effort axial exercé par la vis et l'écrou plaque les première et seconde formes tronconiques de chaque demi-axe respectivement contre une première surface tronconique et une seconde surface tronconique.

La liaison articulée élastique selon cette troisième variante ne comporte pas d'entretoise, la seconde liaison par encastrement permettant également, sous cet effort axial, la mise en appui axial de la rotule sur les deux demi-axes constituant la tige.

Avantageusement, l'utilisation de deux liaisons coniques pour cette troisième variante de la liaison articulée élastique permet de proposer une solution très compacte notamment en diamètre et encaissant des couples très importants dans un encombrement réduit.

La présente invention a aussi pour objet un rotor d'un aéronef à voilure tournante comportant la liaison articulée élastique précitée.

Un tel rotor comporte :
- au moins deux pales,
- un moyeu entraînant en rotation les pales autour d'un axe de rotation, et
- une pluralité d'amortisseurs de traînée, le nombre d'amortisseurs de traînée étant égal au nombre de pales.

Selon un premier exemple, chaque amortisseur de traînée relie deux pales adjacentes respectivement par une liaison articulée élastique précitée.

Selon un second exemple, chaque amortisseur de traînée est lié à une seule pale par une liaison articulée élastique précitée. De plus, chaque amortisseur de traînée est lié au moyeu du rotor par une liaison articulée élastique précitée ou bien par un autre type de liaison articulée élastique comportant au moins une liaison à rotule.

L'invention et ses avantages apparaîtront avec plus de détails dans le cadre de la description qui suit avec des exemples de réalisation donnés à titre illustratif en référence aux figures annexées qui représentent :
- les figures 1 et 2, un rotor d'un aéronef à voilure tournante,
- les figures 3 et 4, un mode de réalisation d'une liaison articulée élastique selon l'invention,
- la figure 5, une vue de détail d'un demi-axe selon ce mode de réalisation,
- la figure 6, un exemple de rotule élastique, et
- la figure 7, une variante d'une liaison articulée élastique selon l'invention.

Les éléments présents dans plusieurs figures distinctes sont affectés d'une seule et même référence.

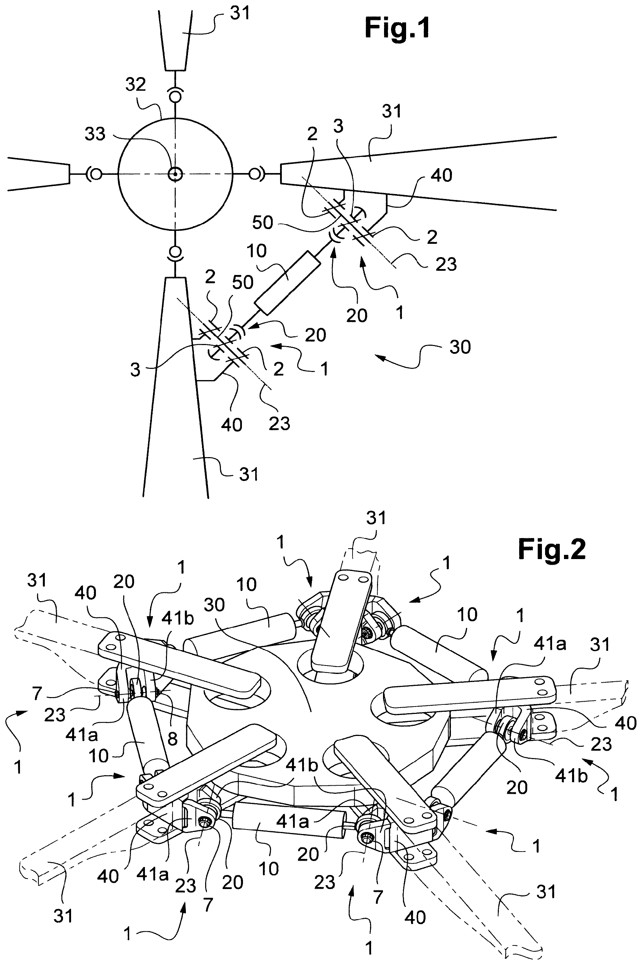

Les figures 1 et 2 représentent un rotor 30 d'un aéronef à voilure tournante, la figure 1 étant une représentation schématique des liaisons mécaniques constituant ce rotor 30. Ce rotor 30 comporte un moyeu 32 entraînant en rotation une pluralité de pales 31 autour d'un axe de rotation 33 sensiblement vertical. Ce rotor 30 peut comporter par exemple selon la figure 1 quatre pales 31 ou bien selon la figure 2 cinq pales 31.

Chaque pale 31 est liée au moyeu 32 par l'intermédiaire d'une liaison à rotule, par exemple une butée sphérique lamifiée dédiée à chaque pale permettant à chaque pale 31 de débattre autour d'un axe de battement sensiblement horizontal, d'un axe de traînée sensiblement vertical, et d'un axe de pas de la pale, cet axe de pas étant situé sensiblement longitudinalement selon l'envergure de la pale 31.

Ce rotor 30 comporte également une pluralité d'amortisseurs de traînée 10, le nombre d'amortisseurs de traînée 10 étant égal au nombre de pales 31, bien qu'un seul amortisseur 10 soit représenté sur la figure 1. Chaque amortisseur de traînée 10 relie deux pales 31 adjacentes permettant ainsi d'assurer la stabilité de l'aéronef à voilure tournante et de prévenir les phénomènes de résonance sol et de résonance air que peut subir cet aéronef.

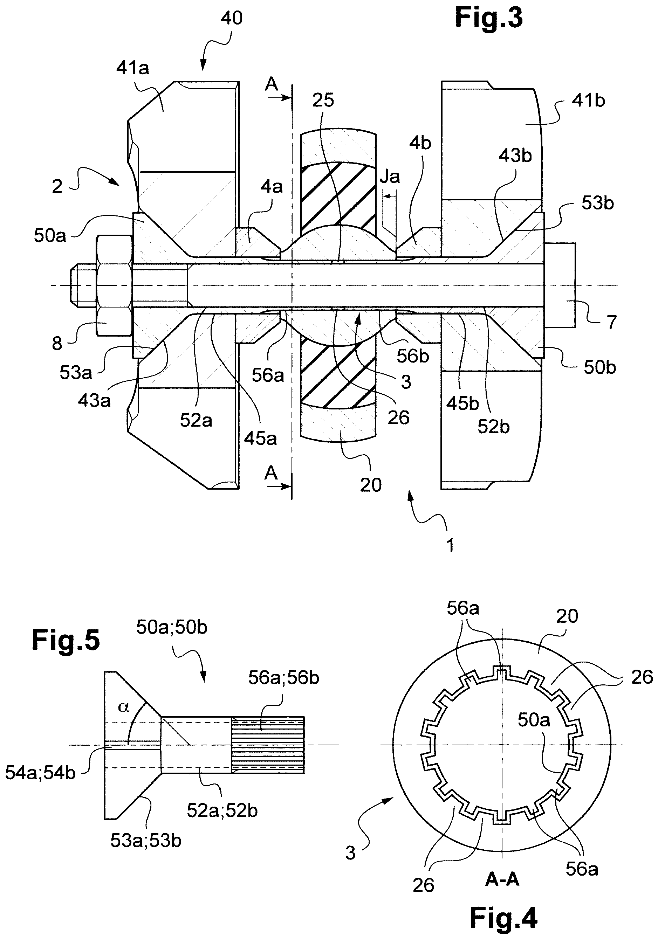

Une liaison articulée élastique 1 permet la liaison entre un amortisseur de traînée 10 et une pale 31. Cette liaison articulée élastique 1 est représentée plus en détail sur les figures 3 et 4.

Cette liaison articulée élastique 1 comprend :
- une chape 40 solidaire de la pale 31 et munie de deux branches 41a,41b, chaque branche 41a,41b comportant un premier orifice 45a,45b,
- une rotule élastique 20 liée à un amortisseur de traînée 10 et comportant une direction privilégiée 23 de rotation et en son centre un second orifice 25 dont l'axe est selon cette direction privilégiée 23,
- une tige 50 formée par deux demi-axes 50a,50b comportant un axe de révolution,
- deux entretoises 4a,4b métalliques, et
- une vis 7 et un écrou 8.

La rotule élastique 20 est positionnée dans la chape 40 afin que le second orifice 25 soit coaxial aux premiers orifices 45a,45b de la chape 40. La tige 50 est orientée afin que son axe de révolution soit selon la direction privilégiée 23 de la rotule élastique 20, chaque demi-axe 50a,50b étant assemblé dans le second orifice 25 de la rotule élastique 20 et respectivement dans un premier orifice 45a,45b de la chape 40.

Les deux entretoises 4a,4b sont positionnées de part et d'autre de la rotule élastique 20 sur chaque demi-axe 50a,50b et entre les deux branches 41a,41b de la chape 40. De plus, les demi-axes 50a,50b sont identiques et assemblés de façon symétrique dans la liaison articulée élastique 20.

La vis 7 et l'écrou 8 sont positionnés de part et d'autre des demi-axes 50a,50b, la vis 7 traversant un troisième orifice 52a,52b présent dans chaque demi-axe 50a,50b. La vis 7 et l'écrou 8 peuvent ainsi exercer un effort axial de serrage sur les deux demi-axes 50a,50b. De plus, afin de prévenir tout risque de perte de cet effort axial, cet écrou 8 peut être un écrou freiné. Une goupille peut également être utilisée pour sécuriser la liaison entre la vis 7 et l'écrou 8 et éviter ainsi une réduction, voire une perte de cet effort axial.

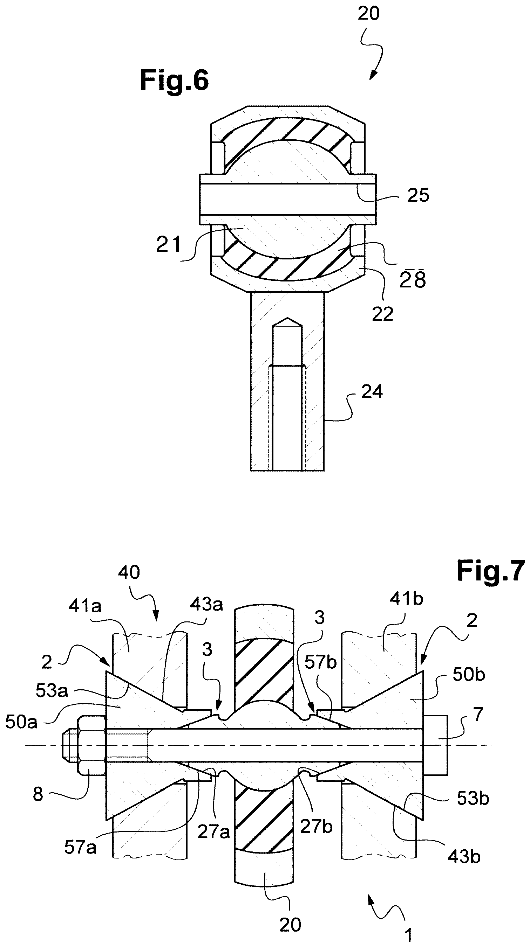

Un exemple de rotule élastique 20 est représenté sur la figure 6. Cette rotule élastique 20 comporte un élément interne 21, muni d'un orifice 25 et d'une surface externe sphérique, et un élément externe 22, muni d'une surface interne sphérique. Un élément de liaison 24 permet de relier cette rotule élastique 20 à un autre composant tel l'amortisseur de traînée 10. Les éléments interne 21 et externe 22 ainsi que l'élément de liaison 24 sont par exemple en acier. Un organe en élastomère 28 muni d'une surface externe sphérique et d'une surface interne sphérique est lié respectivement à l'élément interne 21 et à l'élément externe 22 par exemple par collage. Un débattement limité en rotation est alors possible autour de toutes les directions entre l'élément interne 21 et à l'élément externe 22 grâce à l'organe en élastomère 28. Ce débattement en rotation est limité angulairement et soumis à la raideur de l'organe en élastomère 28.

Cette rotule élastique 20 permet ainsi un débattement en rotation de quelques degrés à quelques dizaines de degrés de l'amortisseur de traînée 10 par rapport à la tige 50 et, par suite, par rapport à la pale 31, ce débattement en rotation n'étant pas libre, mais soumis à la raideur de la rotule élastique 20. De plus, le comportement de la rotule élastique 20 n'est pas identique dans toutes les directions, la rotule élastique 20 possédant une direction privilégiée 23 qui est la direction de la tige 50.

Selon les figures 1 et 2, la tige 50 est positionnée afin que son axe de révolution soit dans un plan sensiblement perpendiculaire à l'axe de rotation 33 du moyeu 32, c'est-à-dire sensiblement horizontal, l'axe de rotation 33 du moyeu 32 étant sensiblement vertical. Cette position de la tige 50 s'entend uniquement lorsque les pales 31 ne subissent aucun battement. Dans ce cas, les axes de révolution des tiges 50 reliant les amortisseurs de traînée 10 à chaque pale 31 du rotor sont alors coplanaires.

Ainsi, l'axe de révolution de la tige 50 étant selon la direction privilégiée 23 de la rotule élastique 20, cette direction privilégiée 23 de la rotule élastique 20 est sensiblement perpendiculaire à l'axe de rotation 33 du moyeu 32. Par suite, la rotule élastique 20 est sollicitée essentiellement autour de sa direction privilégiée 23 par le couple généré par le battement des pales 31, qui est principalement autour de cette direction privilégiée 23.

De fait, la rotule élastique 20 est peu sollicitée selon des directions perpendiculaires à sa direction privilégiée 23 et peut fonctionner de façon fiable et durable.

Par contre, la tige 50 ainsi que les liaisons entre cette tige 50 et d'une part la chape 40, d'autre part la rotule élastique 20 reprennent la part essentielle de ce couple et des sollicitations en torsion autour de l'axe de révolution de la tige 50 consécutives à ce couple.

Afin de résister à ce couple et à ces sollicitations en torsion générées par le battement des pales, la tige 50 est liée par une première liaison par encastrement 2 à la chape 40 de la pale 31 et par une seconde liaison par encastrement 3 à la rotule élastique 20.

La première liaison par encastrement 2 de la liaison articulée élastique 1, représentée sur la figure 3, est obtenue par frottement entre d'une part une forme tronconique 53a,53b située à une première extrémité de chaque demi-axe 40a,40b constituant la tige 50 et d'autre part une surface tronconique 43a,43b située au niveau du premier orifice 45a,45b de chaque branche 41a,41b de la chape 40. Sous l'effet de l'effort axial généré par la vis 7 et l'écrou 8, chaque forme tronconique 53a,53b d'un demi-axe 50a,50b est plaquée contre une surface tronconique 43a,43b d'un premier orifice 45a,45b formant ainsi la première liaison par encastrement 2.

Afin d'obtenir une première liaison par encastrement 2 capable de résister à de fortes sollicitations en torsion, chaque forme tronconique 53a,53b et chaque surface tronconique 43a,43b ont une conicité sensiblement identique. On entend par conicité l'angle α entre une génératrice de cette forme tronconique 53a,53b et son axe de révolution. Cet angle α est représenté sur la figure 5 qui décrit un demi-axe 50a,50b.

En outre, selon une première variante de l'invention, la forme tronconique 53a,53b de chaque demi-axe 50a,50b est munie, comme représenté sur la figure 5, d'au moins une fente 54a,54b. Chaque fente 54a,54b permet d'absorber les différentes tolérances de fabrication des formes tronconiques 53a,53b et des surfaces tronconiques 43a,43b.

De plus, le choix des matières des demi-axes 50a,50b et de la chape 40 est important pour avoir un coefficient de frottement élevé entre la forme tronconique 53a,53b et la surface tronconique 43a,43b. La chape 40 et les demi-axes 50a,50b sont par exemple en acier.

Par ailleurs, l'utilisation de formes tronconiques 53a,53b et de surfaces tronconiques 43a,43b qui sont lisses permet que la tige 50 constituée par les deux demi-axes 50a,50b ne soit pas indexée angulairement par rapport à la chape 40. De fait, le montage de chaque demi-axe 50a,50b dans les premiers orifices 45a,45b de la chape 40 peut se faire quelque soit leur position angulaire autour de l'axe de rotation de la tige 50 et est ainsi facilité.

La seconde liaison par encastrement 3 de la liaison articulée élastique 1, représentée sur les figures 3 à 5, est obtenue par des cannelures 26,56a,56b. D'une part des première cannelures 56a,56b sont présentes sur la surface extérieure d'une seconde extrémité de chaque demi-axe 50a,50b et d'autre part des secondes cannelures 26 sont présentes dans le second orifice 25 de la rotule élastique 20. La figure 4 représente une section A-A de cette seconde liaison par encastrement et la figure 5 représente uniquement un demi-axe 50a,50b sur lequel les premières cannelures 56a,56b sont visibles. Ces cannelures 26,56a,56b permettent ainsi de transmettre un couple entre la rotule élastique 20 et la tige 50 constituée des deux demi-axes 50a,50b.

De plus, l'effort axial de serrage exercé par la vis 7 et l'écrou 8 a une fonction de butée axiale et bloque la translation axiale entre la tige 50 et la rotule élastique 20 au niveau de ces cannelures 26,56a,56b. La tige 50 et la rotule élastique 20 sont alors solidaires et liées par cette seconde liaison par encastrement 3.

Par ailleurs, grâce à cet effort axial, la liaison articulée élastique 1 ne possède aucun jeu axial *Ja* alors qu'un jeu axial *Ja* non nul est cependant nécessaire pour son assemblage. L'application de cet effort axial par l'intermédiaire de la vis 7 et de l'écrou 8 permet, les formes tronconiques 53a,53b étant en appui sur les surfaces tronconiques 43a,43b, de déformer les deux branches 41a,41b dans le domaine élastique.

Chaque branche 41a,41b est alors en appui contre une entretoise 4a,4b qui est elle-même en appui contre la rotule élastique 20. Le fonctionnement de la rotule élastique 20 est ainsi optimisé, aucun jeu axial *Ja* ne venant perturber ce fonctionnement.

En outre, selon une seconde variante de l'invention non représentée sur les figures, l'écrou 8 peut être intégré dans un des demi-axes 50a,50b, ces demi-axes 50a,50b n'étant alors pas identiques.

Une troisième variante de l'invention est représentée sur la figure 7, les première et seconde liaisons par encastrement 2,3 de la liaison articulée élastique 1 étant alors obtenues par frottement entre deux portées tronconiques. Chaque demi-axe 50a,50b comporte, à une première extrémité, une première forme tronconique 53a,53b coopérant respectivement avec une première surface tronconique 43a,43b d'un premier orifice d'une branche 41a,41b de la chape 40. De plus, chaque demi-axe 50a,50b comporte, à une seconde extrémité, une seconde forme tronconique 57a,57b coopérant avec une seconde surface tronconique 27a,27b présente à chaque extrémité de la rotule élastique 20.

Une vis 7 et un écrou 8 sont positionnés de part et d'autre des demi-axes 50a,50b afin d'exercer un effort axial de serrage sur les deux demi-axes 50a,50b.

Par suite, cet effort axial plaque les première et seconde formes tronconiques 53a,53b,57a,57b de chaque demi-axe 53a,53b respectivement contre une première surface tronconique et une seconde surface tronconique 43a,43b,27a,27b, formant ainsi les première et seconde liaisons par encastrement 2,3. De fait, la liaison articulée élastique 1 selon cette troisième variante ne possède aucun jeu axial et la présence d'entretoises 4a,4b n'est pas nécessaire.

En outre, les premières et secondes formes tronconiques 53a,53b57a,57b peuvent être munies, comme pour la première variante de l'invention, d'au moins une fente afin d'absorber les différentes tolérances de fabrication de ces premières et secondes formes tronconiques 53a,53b,57a,57b et des premières et secondes surfaces tronconiques 43a,43b,27a,27b.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Rotor (30) d'aéronef à voilure tournante comportant :
- au moins deux pales (31),
- un moyeu (32) entraînant en rotation lesdites pales (31) autour d'un axe de rotation (33), et
- une pluralité d'amortisseurs de traînée (10), chaque amortisseur de traînée (10) comportant au moins une liaison articulée élastique (1) reliant ledit amortisseur de traînée (10) à une pale (31), ladite liaison articulée élastique (1) comportant :
• une rotule élastique (20) liée audit amortisseur de traînée (10), ladite rotule élastique (20) comportant une direction privilégiée (23) de rotation,
• une chape (40) solidaire de ladite pale (31),
• une tige (50) comportant un axe de révolution, ladite tige (50) étant assemblée dans ladite chape (40) et ladite rotule élastique (20), ledit axe de révolution de ladite tige (50) étant selon ladite direction privilégiée (23) de ladite rotule élastique (20),
ledit axe de révolution de ladite tige (50) étant positionné dans un plan perpendiculaire audit axe de rotation (33) dudit moyeu (32),
le rotor étant **caractérisé en ce que**
ladite tige (50) est liée par une première liaison par encastrement (2) à ladite chape (40) et par une seconde liaison par encastrement (3) à ladite rotule élastique (20).

2. Rotor (30) d'aéronef à voilure tournante selon la revendication 1,
**caractérisée en ce qu'**au moins une liaison par encastrement (2,3) est obtenue par frottement entre deux portées tronconiques (43,53).

3. Rotor (30) d'aéronef à voilure tournante selon l'une quelconque des revendications 1 à 2,
**caractérisée en ce qu'**au moins une liaison par encastrement (2,3) est obtenue par des cannelures (26,56) et une butée axiale.

4. Rotor (30) d'aéronef à voilure tournante selon la revendication 1,
**caractérisée en ce que** les première et seconde liaisons par encastrement (2,3) sont obtenues respectivement par frottement entre deux portées tronconiques (43,53,27,57).

5. Rotor (30) d'aéronef à voilure tournante selon l'une quelconque des revendications 1 à 3, ladite chape (40) étant munie de deux branches (41a,41b), chaque branche (41a,41b) comportant un premier orifice (45a,45b), ladite rotule élastique (20) comportant en son centre et selon ladite direction privilégiée (23) un second orifice (25) coaxial auxdits premiers orifices (45a,45b), **caractérisée en ce que**
- ladite tige (50) est composée de deux demi-axes (50a,50b), chaque demi-axe (50a,50b) étant assemblé dans un desdits premiers orifices (45a,45b) et dans ledit second orifice (25),
- deux entretoises (4a,4b) sont positionnées de part et d'autre de ladite rotule élastique (20) sur chaque demi-axe (50a,50b) et entre lesdites branches (41 a,41 b), et
- une vis (7) et un écrou (8), positionnés de part et d'autre desdits demi-axes (50a,50b), permettent d'appliquer un effort axial entre lesdits demi-axes (50a,50b) et chaque branche (41a,41b).

6. Rotor (30) d'aéronef à voilure tournante selon l'une quelconque des revendications 1 à 5,
**caractérisée en ce que** ladite tige (50) n'est pas indexée angulairement par rapport à ladite chape (33).

7. Rotor (30) d'aéronef à voilure tournante selon l'une quelconque des revendications 5 à 6,
**caractérisée en ce que** chaque demi-axe (50a,50b) comporte une forme tronconique (53a,53b) et chaque premier orifice (45a,45b) comporte une surface tronconique (43a,43b), chaque forme tronconique (53a,53b) coopérant avec une surface tronconique (43a,43b) pour former ladite première liaison par encastrement (2).

8. Rotor (30) d'aéronef à voilure tournante selon l'une quelconque des revendications 5 à 7,
**caractérisée en ce que** chaque demi-axe (50a,50b) comporte des premières cannelures (56a,56b) et ledit second orifice (25) comporte des secondes cannelures (26), lesdites premières cannelures (56a,56b) coopérant avec lesdites secondes cannelures (26) pour former ladite seconde liaison par encastrement (3).

9. Rotor (30) d'aéronef à voilure tournante selon la revendication 4, ladite chape (40) étant munie de deux branches (41a,41b), chaque branche (41a,41b) comportant un premier orifice (45a,45b),
**caractérisée en ce que**
- ladite tige (50) est composée de deux demi-axes (50a,50b), chaque demi-axe (50a,50b) étant assemblé dans un desdits premiers orifices (45a,45b) et comportant une première forme tronconique (53a,53b) à une première extrémité et une seconde forme tronconique (57a,57b) à une seconde extrémité,
- chaque premier orifice (45a,45b) comportant une première surface tronconique (43a,43b) coopérant respectivement avec une première forme tronconique (53a,53b) pour former ladite première liaison par encastrement (2),
- ladite rotule élastique (20) comportant autour de ladite direction privilégiée (23) et de façon coaxiale auxdits premiers orifices (45a,45b) une seconde surface tronconique (27a,27b) à chacune de ses extrémités coopérant respectivement avec chaque seconde forme tronconique (57a,57b) pour former ladite seconde liaison par encastrement (3), et
- une vis (7) et un écrou (8), positionnés de part et d'autre desdits demi-axes (50a,50b), permettent d'appliquer un effort axial entre lesdits demi-axes (50a,50b), ladite rotule élastique (20) et chaque branche (41a,41b).

10. Rotor (30) d'aéronef à voilure tournante selon la revendication 9,
**caractérisée en ce que**, la première et/ou la seconde liaison(s) par encastrement (2,3) étant obtenue(s) respectivement par frottement entre deux portées tronconiques (43,53,27,57), au moins une forme tronconique (53a,53b,57a,57b) de chaque demi-axe (50a,50b) est munie d'au moins une fente (54).

11. Rotor (30) d'aéronef à voilure tournante selon l'une quelconque des revendications 5 à 10,
**caractérisée en ce que** ledit écrou (8) est intégré dans un desdits demi-axes (50a,50b).

12. Rotor (30) d'aéronef à voilure tournante selon l'une quelconque des revendications 5 à 10,
**caractérisée en ce que** lesdits demi-axes (50a,50b) sont identiques.

13. Rotor (30) d'aéronef à voilure tournante selon l'une quelconque des revendications 1 à 12,
**caractérisé en ce que** chaque amortisseur de traînée (10) est lié à deux pales (31) adjacentes respectivement par une liaison articulée élastique (1).

14. Rotor (30) d'aéronef à voilure tournante selon l'une quelconque des revendications 1 à 12,
**caractérisé en ce que** chaque amortisseur de traînée (10) est lié à une pale (31) par une liaison articulée élastique (1) et audit moyeu (30).

## Patentansprüche

1. Rotor (30) eines Drehflügelflugzeugs mit:
- mindestens zwei Rotorblättern (31),
- einer Nabe (32), die die Rotorblätter (31) zu einer Rotation um eine Rotationsachse (33) antreibt, und
- einer Mehrzahl von Zugdämpfungsvorrichtungen (10), wobei jede Zugdämpfungsvorrichtung (10) mindestens eine elastische Gelenkverbindung (1) aufweist, die die Zugdämpfungsvorrichtung (10) mit einem Rotorblatt (31) verbindet, wobei die elastische Gelenkverbindung (1) aufweist:
• ein elastisches Kugelgelenk (20), das mit der Zugdämpfungsvorrichtung (10) verbunden ist, wobei das elastische Kugelgelenk (20) eine Vorzugsdrehrichtung (23) aufweist,
• ein Gabelgelenk (40), das mit dem Rotorblatt (31) fest verbunden ist,
• eine Stange (50) mit einer Drehachse, wobei die Stange (50) in dem Gabelgelenk (40) und dem elastischen Kugelgelenk (20) montiert ist, wobei die Drehachse der Stange (50) in der Vorzugsrichtung (23) des elastischen Kugelgelenks (20) verläuft, wobei die Drehachse der Stange (50) in einer zur Achse (33) der Nabe (32) senkrechten Ebene positioniert ist,
wobei der Rotor **dadurch gekennzeichnet ist, dass**
die Stange (50) durch eine erste Steckverbindung (2) mit dem Gabelgelenk (40) und durch eine zweite Steckverbindung (3) mit dem elastischen Kugelgelenk (20) verbunden ist.

2. Rotor (30) eines Drehflügelflugzeugs nach Anspruch 1,
**dadurch gekennzeichnet, dass** mindestens eine Steckverbindung (2, 3) durch Reibung zwischen zwei kegelstumpfförmigen Auflageflächen (43, 53) erhalten wird.

3. Rotor (30) eines Drehflügelflugzeugs nach einem der Ansprüche 1 bis 2,
**dadurch gekennzeichnet, dass** mindestens eine Steckverbindung (2, 3) durch Längsnuten (26, 56) und einen axialen Anschlag erhalten wird.

4. Rotor (30) eines Drehflügelflugzeugs nach Anspruch 1,
**dadurch gekennzeichnet, dass** die erste und die zweite Steckverbindung (2, 3) jeweils durch Reibung zwischen zwei kegelstumpfförmigen Auflageflächen (43, 53, 27,57) erhalten werden.

5. Rotor (30) eines Drehflügelflugzeugs nach einem der Ansprüche 1 bis 3, wobei das Gabelgelenk (40) mit zwei Armen (41a, 41b) versehen ist, wobei jeder Arm (41a, 41b) eine erste Öffnung (45a, 45b) aufweist, das elastische Kugelgelenk (20) in seiner Mitte und entlang der Vorzugsrichtung (23) eine zweite Öffnung (25) aufweist, die koaxial mit den ersten Öffnungen (45a, 45b) ist,
**dadurch gekennzeichnet, dass**
- die Stange (50) aus zwei Halbachsen (50a, 50b) zusammengesetzt ist, wobei jede Halbachse (50a, 50b) in einer der ersten Öffnungen (45a, 45b) und der zweiten Öffnung (25) montiert ist,
- zwei Abstandshalter (4a, 4b) auf beiden Seiten des elastischen Kugelgelenks (20) auf jeder Halbachse (50a, 50b) und zwischen den Armen (41a, 41b) positioniert sind, und
- eine Schraube (7) und eine Mutter (8), die zu beiden Seiten der Halbachsen (50a, 50b) positioniert sind, es ermöglichen, eine axiale Kraft zwischen den Halbachsen (50a, 50b) und jedem Arm (41a, 41b) auszuüben.

6. Rotor (30) eines Drehflügelflugzeugs nach einem der Ansprüche 1 bis 5,
**dadurch gekennzeichnet, dass** die Stange (50) nicht winkelmäßig im Verhältnis zu dem Gabelgelenk (33) indiziert ist.

7. Rotor (30) eines Drehflügelflugzeugs nach einem der Ansprüche 5 bis 6,
**dadurch gekennzeichnet, dass** jede Halbachse (50a, 50b) eine kegelstumpfförmige Form (53a, 53b) aufweist, und jede Öffnung (45a, 45b) eine kegelstumpfförmige Fläche (43a, 43b) aufweist, wobei jede kegelstumpfförmige Form (53a, 53b) mit einer kegelstumpfförmigen Fläche (43a, 43b) zusammenwirkt, um die erste Steckverbindung (2) zu bilden.

8. Rotor (30) eines Drehflügelflugzeugs nach einem der Ansprüche 5 bis 7,
**dadurch gekennzeichnet, dass** jede Halbachse (50a, 50b) erste Längsnuten (56a, 56b) aufweist, und die zweite Öffnung (25) zweite Längsnuten (26) aufweist, wobei die ersten Längsnuten (56a, 56b) mit den zweiten Längsnuten (26) zusammenwirken, um die zweite Steckverbindung (3) zu bilden.

9. Rotor (30) eines Drehflügelflugzeugs nach Anspruch 4, wobei das Gabelgelenk (40) mit zwei Armen (41a, 41b) versehen ist, wobei jeder Arm (41a, 41b) eine erste Öffnung (45a, 45b) aufweist,
**dadurch gekennzeichnet, dass**
- die Stange (50) aus zwei Halbachsen (50a, 50b) zusammengesetzt ist, wobei jede Halbachse (50a, 50b) in einer der ersten Öffnungen (45a, 45b) montiert ist und eine erste kegelstumpfförmige Form (53a, 53b) an einem ersten Ende und eine zweite kegelstumpfförmige Form (57a, 57b) an einem zweiten Ende aufweist,
- jede erste Öffnung (45a, 45b) eine erste kegelstumpfförmige Fläche (43a, 43b) aufweist, die jeweils mit einer ersten kegelstumpfförmigen Form (53a, 53b) zusammenwirkt, um die erste Steckverbindung (2) zu bilden,
- das elastische Kugelgelenk (20) um die Vorzugsrichtung (23) herum und koaxial zu den ersten Öffnungen (45a, 45b) eine zweite kegelstumpfförmige Fläche (27a, 27b) an jedem seiner Enden aufweist, die jeweils mit jeder zweiten kegelstumpfförmigen Form (57a, 57b) zusammenwirkt, um die zweite Steckverbindung (3) zu bilden, und
- eine Schraube (7) und eine Mutter (8), die zu beiden Seiten der Halbachsen (50a, 50b) positioniert sind, es erlauben, eine axiale Kraft zwischen den Halbachsen (50a, 50b), dem elastischen Kugelgelenk (20) und jedem Arm (41a, 41b) anzulegen.

10. Rotor (30) eines Drehflügelflugzeugs nach Anspruch 9,
**dadurch gekennzeichnet, dass** die erste und/oder die zweite Steckverbindung (2, 3) jeweils erhalten wird/werden durch Reibung zwischen zwei kegelstumpfförmigen Auflageflächen (43, 53, 27, 57), wobei mindestens eine kegelstumpfförmige Form (53a, 53b, 57a, 57b) jeder Halbachse (50a, 50b) mit mindestens einem Schlitz (54) versehen ist.

11. Rotor (30) eines Drehflügelflugzeugs nach einem der Ansprüche 5 bis 10,
**dadurch gekennzeichnet, dass** die Mutter (8) in einer der Halbachsen (50a, 50b) integriert ist.

12. Rotor (30) eines Drehflügelflugzeugs nach einem der Ansprüche 5 bis 10,
**dadurch gekennzeichnet, dass** die Halbachsen (50a, 50b) identisch sind.

13. Rotor (30) eines Drehflügelflugzeugs nach einem der Ansprüche 1 bis 12,
**dadurch gekennzeichnet, dass** jede Zugdämpfungsvorrichtung (10) mit zwei benachbarten Rotorblättern (31) jeweils über eine elastische Gelenkverbindung (1) verbunden ist.

14. Rotor (30) eines Drehflügelflugzeugs nach einem der Ansprüche 1 bis 12,
**dadurch gekennzeichnet, dass** jede Zugdämpfungsvorrichtung (10) mit einem Rotorblatt (31) über eine elastische Gelenkverbindung (1) und mit der Nabe (30) verbunden ist.

## Claims

1. Rotor (30) of a rotary-wing aircraft comprising:
- at least two blades (31),
- a hub (32) driving in rotation said blades (31) about an axis of rotation (33), and
- a plurality of drag dampers (10), each drag damper (10) comprising at least one elastic articulated connection (1) connecting said drag damper (10) to a blade (31), said elastic articulated connection (1) comprising:
• an elastic ball joint (20) connected to said drag damper (10), said elastic ball joint (20) comprising a preferred direction of rotation (23),
• a clevis (40) secured to said blade (31),
• a rod (50) comprising an axis of revolution, said rod (50) being assembled in said clevis (40) and said elastic ball joint (20), said axis of revolution of said rod (50) being according to said preferred direction (23) of said elastic ball joint (20),
said axis of revolution of said rod (50) being positioned in a plane perpendicular to said axis (33) of said hub (32),
the rotor being **characterised in that** said rod (50) is connected by a first connection by embedding (2) to said clevis (40) and by a second connection by embedding (3) to said elastic ball joint (20).

2. Rotor (30) of a rotary-wing aircraft according to Claim 1,
**characterised in that** at least one connection by embedding (2,3) is obtained by friction between two frustoconical bearing surfaces (43,53).

3. Rotor (30) of a rotary-wing aircraft according to any one of Claims 1 to 2,
**characterised in that** at least one connection by embedding (2,3) is obtained by grooves (26,56) and an axial abutment.

4. Rotor (30) of a rotary-wing aircraft according to Claim 1,
**characterised in that** the first and second connections by embedding (2,3) are obtained respectively by friction between two frustoconical surfaces (43, 53, 27, 57).

5. Rotor (30) of a rotary-wing aircraft according to any one of Claims 1 to 3, said clevis (40) being provided with two branches (41a, 41b), each branch (41a,41b) comprising a first orifice (45a,45b), said elastic ball joint (20) comprising at its centre and according to said preferred direction (23) a second orifice (25) coaxial to said first orifices (45a,45b),
**characterised in that**
- said rod (50) is composed of two half-shafts (50a,50b), each half-shaft (50a,50b) being assembled in one of said first orifices (45a,45b) and in said second orifice (25),
- two spacers (4a,4b) are positioned on one side and on the other side of said elastic ball joint (20) on each half-shaft (50a,50b) and between said branches (41a,41b), and
- a screw (7) and a nut (8), positioned on one side and on the other side of said half-shafts (50a,50b), enable an axial force to be applied between said half-shafts (50a,50b) and each branch (41a,41b).

6. Rotor (30) of a rotary-wing aircraft according to any one of Claims 1 to 5,
**characterised in that** said rod (50) is not angularly indexed relative to said clevis (33).

7. Rotor (30) of a rotary-wing aircraft according to any one of Claims 5 to 6,
**characterised in that** each half-shaft (50a,50b) has a frustoconical shape (53a,53b) and each first orifice (45a,45b) has a frustoconical surface (43a,43b), each frustoconical shape (53a,53b) cooperating with a frustoconical surface (43a,43b) to form said first connection be embedding (2).

8. Rotor (30) of a rotary-wing aircraft according to any one of Claims 5 to 7,
**characterised in that** each half-shaft (50a,50b) comprises first grooves (56a,56b) and said second orifice (25) comprises second grooves (26), said first grooves (56a,56b) cooperating with said second grooves (26) to form said second connection by embedding (3).

9. Rotor (30) of a rotary-wing aircraft according to Claim 4, said clevis (40) being provided with two branches (41a,41b), each branch (41a,41b) comprising a first orifice (45a,45b),
**characterised in that**
- said rod (50) is composed of two half-shafts (50a,50b), each half-shaft (50a,50b) being assembled in one of said first orifices (45a,45b) and having a first frustoconical shape (53a,53b) at a first end and a second frustoconical shape (57a,57b) at a second end,
- each first orifice (45a,45b) comprising a first frustoconical surface (43a,43b) cooperating respectively with a first frustoconical shape (53a,53b) to form said first connection by embedding (2),
- said elastic ball joint (20) comprising around said preferred direction (23) and coaxially to said first orifices (45a,45b) a second frustoconical surface (27a,27b) at each of its ends cooperating respectively with each second frustoconical shape (57a,57b) to form said second connection by embedding (3), and
- a screw (7) and a nut (8), positioned on one side and on the other side of said half-shafts (50a,50b), enable an axial force to be applied between said half-shafts (50a,50b), said elastic ball joint (20) and each branch (41a,41b).

10. Rotor (30) of a rotary-wing aircraft according to Claim 9,
**characterised in that**, the first and/or the second connection(s) by embedding (2,3) being obtained respectively by friction between two frustoconical bearing surfaces (43,53,27,57), at least one frustoconical shape (53a,53b,57a,57b) of each half-shaft (50a,50b) is provided with at least one slot (54).

11. Rotor (30) of a rotary-wing aircraft according to any one of Claims 5 to 10,
**characterised in that** said nut (8) is integrated in one of said half-shafts (50a,50b).

12. Rotor (30) of a rotary-wing aircraft according to any one of Claims 5 to 10,
**characterised in that** said half-shafts (50a,50b) are identical.

13. Rotor (30) of a rotary-wing aircraft according to any one of Claims 1 to 12,
**characterised in that** each drag damper (10) is connected to two adjacent blades (31) respectively by an elastic articulated connection (1).

14. Rotor (30) of a rotary-wing aircraft according to any one of Claims 1 to 12,
**characterised in that** each drag damper (10) is connected to a blade (31) by an elastic articulated connection (1) and to said hub (30).
